# EUROPEAN PATENT APPLICATION

(11) **EP 1 134 608 A1**
(43) Date of publication of application: **19.09.2001**
(21) Application number: 00302048.4
(22) Date of filing: 14.03.2000
(51) Int. Cl.: G02F 1/01, H04J 14/02

(54) **Drop node having an optical drop and continue function for an optical transmission network**

(71) Applicant: LUCENT TECHNOLOGIES INC., Murray Hill, New Jersey 07974-0636 (US)
(72) Inventor: Jennen, Jean G. L., 5611 RH Eindhoven (NL); Wolting, Simon, 3818 HL Amersfoort (NL)
(74) Representative: Williams, David John

(57) **Abstract**

There is dosclosed a drop node for an optical transmission network, having an input port (IP) for receiving an optical signal, a drop port (DP) for extracting a first optical output signal and a through port (TP) for a second optical output signal. The node comprises a circulator (CIRC) and at least one fiber grating (FBG), in which a first terminal of the circulator (CIRC) is connected to the input port (IP). Its second terminal viewed in the circulation direction is coupled to the through port (TP) via the at least one fiber grating (FBG) and its third terminal viewed in the circulation direction is connected to the drop port (DP). The fiber grating (FBG) is provided with a tuning means (TM) controlled by a control quantity, characterized in that the tuning means (TM) is arranged for spatially distributed control of the fiber grating (FBG) in its longitudinal direction. The control quantity has an adjustable profile in the longitudinal direction of the fiber grating (FBG).

## Description

The invention relates to a drop node for an optical transmission network and having an input port for receiving an optical signal, a drop port for extracting a first optical output signal and a through port for a second optical output signal, said node comprising a circulator and at least one fiber grating, in which a first terminal of the circulator is connected to the input port, its second terminal viewed in the circulation direction is coupled to the through port via the at least one fiber grating and its third terminal viewed in the circulation direction is connected to the drop port and in which the fiber grating is provided with a tuning means controlled by a control quantity.

Such a drop node is for instance known from the article "Programmable fiber grating based wavelength demultiplexer" by L. Quetel et al., published in "OFC '96 Technical Digest" pages 120-121. The grating, in particular a fiber Bragg grating is an optical component reflecting energy at a given wavelength. An optical signal of said given Bragg wavelength applied to the input port of the drop node is received by the first terminal of the circulator and circulated thereby to its second terminal, to which the fiber Bragg grating is connected. The optical signal of said given wavelength is reflected by the fiber Bragg grating to the second terminal of the circulator and circulated thereby to the third terminal of the said circulator and is conducted further to the drop port of the drop node. The optical signal of said given wavelength could be extracted from the drop port of the drop node, while the fiber Bragg grating does not put through said signal to the through port of the drop node.

Under circumstances it could be required that said optical signal of the given wavelength should not be reflected to the drop port of the drop node but to the through port. For this operation the fiber Bragg grating is provided with tuning means controlled by a controlled quantity. A simple means is to apply a strain on the fiber Bragg grating as said control quantity. By applying a strain on the fiber grating it is tuned to a higher wavelength, so that the optical signal of the abovementioned given wavelength is not reflected to the circulator, but transmitted to the through port of the drop node. Consequently, the optical signal of said given wavelength is either fully dropped or entirely put through to the next node connected to the through port of the concerning drop node. This allows for the creation of point-to-point wavelength paths. However, where optical multicast is required the known drop node is not suited.

The invention has the object to remove the above problem and to provide a drop node which could also partially drop a wavelength channel and put the remaining part through to the next node. This selective function will be called optical drop-and-continue hereafter.

Said object is achieved according to the invention, in that the tuning means is arranged for spatially distributed control of the fiber grating in its longitudinal direction and that the control quantity has an adjustable profile in the longitudinal direction of the fiber grating.

The advantages of the invention are:
- arbitrary switching between full drop and drop and continue is possible with the invention,
- marginal additional costs with respect to providing full drop only,
- no dedicated optical drop-and-continue wavelength required,
- termination of multicast channel guaranteed at last multicast node in the network, and
- improved security as opposed to solutions in which a broadcast channel is used and all intended recipients have to tune to that channel.
   It is observed that from the article "Dispersion variable Bragg grating using a piezoelectric stack" of M.M. Ohn et al., published in Ëlectronic Letters", 10th October 1996, vol. 32, No. 21, pages 2000 and 2001 it is known to use a profile, however, this profile is fixed and is only used for compensating chromatic dispersion which is always a fixed phenomenon for a fiber path.

The invention will be explained by referring to the following figures.
Figure 1 shows an example of a known optical network.
Figure 2 shows schematically a known drop node.
Figure 3 shows the characteristic of said drop node of Fig. 2.
Figure 4 shows schematically a preferred embodiment of a drop node according to the invention.
Figures 5a and 5b show the characteristics of the first fiber Bragg grating of the drop node according to Fig. 4,
Figures 6a and 6b and Figures 7a and 7b show embodiments of the profile of the control quantity for controlling the fiber Bragg grating.

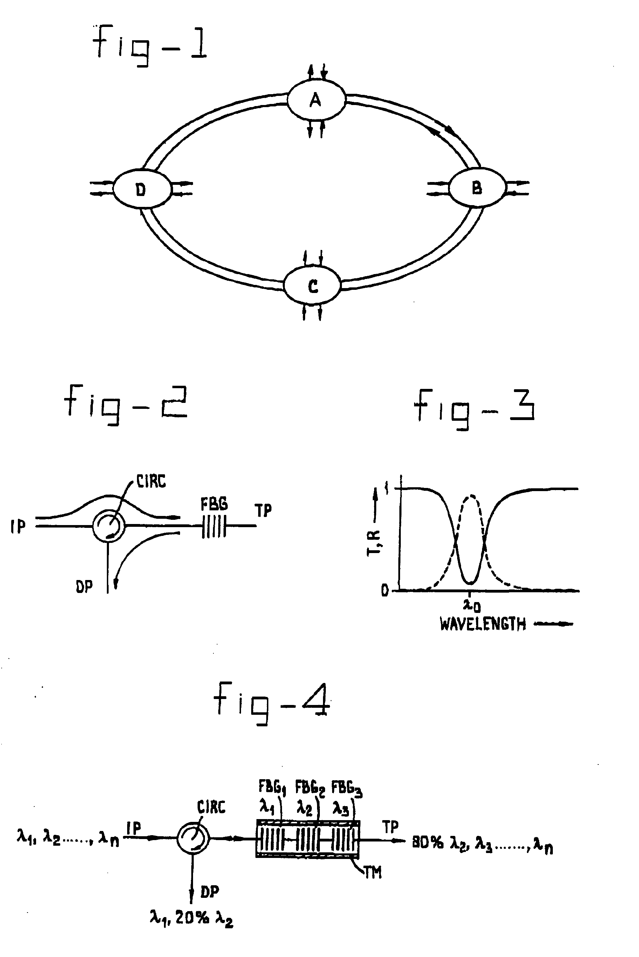

Figure 1 shows an example of an optical network, i.e. a metropolitan or enterprise network. This network has a 2-fiber counter-rotating ring topology. The communication over said network is based on the wavelength division multiplex principle (WDM). In the ring several nodes, in this embodiment the nodes A, B, C and D are interconnected. At said nodes A, B, C, D add and drop exchangers are provided by which wavelength channels can be dynamically added and dropped respectively from the ring. In most of the optical transport networks an arbitrary channel is either fully dropped or entirely put through to the next node. This allows for the creation of point-to-point wavelength paths,

In Fig. 2 a drop node is schematically shown. This drop node has an input part IP, a through port TP and a drop port DP, and comprises a circulator CIRC and a fiber Bragg grating FBG. The fiber Bragg grating FBG is designed as a reflector for a wavelength λ₀ with a reflection band (see Fig. 3). This fiber Bragg grating acts as a transparent medium for all signals at wavelengths that are located outside the reflection band around the wayelength λ₀. When an optical signal in a channel at wavelength λ₀ is supplied to the input part IP of the node, this signal occurs on the first, lefthand terminal of the circulator CIRC and leaves the circulator CIRC at the second, righthand terminal for applying to the fiber Bragg grating FBG. The optical signal at wavelength λ₀ is reflected back to the circulator CIRC by said fiber Bragg grating and leaves the third lower terminal of the circulator CIRC and can be extracted from the drop port DP of the node. Consequently, the optical signal in general at wavelength λ₀ is reflected to the drop port DP of the node, while practically no signal of the channel at wavelength λ₀ can be derived from the through port TP. In contrast, the other optical channels at wavelengths outside of the reflection band of the fiber Bragg grating (FBG) are practically completely put through to the through port TP of the node. When a temperature change is applied to the fiber Bragg grating or said grating is stretched, its center wavelength is shifted. The fiber Bragg grating thus could be tuned by a control quantity, e.g. temperature of or strain in the grating. This tuning is called out-of-band (out of the fiber Bragg grating reflectivity band) tuning of the channel at wavelength λ₀ and, as a consequence this channel then appears at the through port.

In Figure 3 the transmission T of the drop node of Fig. 2 from the input port to the through port is shown by the solid curve, The drop port transmission R of the drop node is represented by the dashed curve. The transmissions are represented as a function of wavelength.

By the abovementioned drop node an arbitrary channel can either be fully dropped or entirely be put through to the next node. This allows for the creation of point-to-point wavelength parts.

When optical drop-and-continue is required the network should be provided with means in the nodes to partially drop a wavelength channel and put the remaining part through to the next node. (Hereafter called drop-and-continue).

In order to arrive at cost-effective metropolitan or enterprise networks or other more complex networks that also offer optical drop-and-continue, the combination of optical add-drop functions and optical drop-and-continue into one single device is essential.

In Fig. 4 a preferred solution to the abovementioned problem is shown. This optical drop-and-continue node is a programmable optical drop node that offers selective optical drop-and-continue function per wavelength by (de)tuning of a corresponding fiber Bragg grating FBG. In to-day's approach, out-of-band tuning or detuning is performed by a strain or temperature change of the entire fiber Bragg grating.

According to the invention, the tuning means of the fiber Bragg grating is arranged for spatially distributed control of the fiber grating in its longitudinal direction and the control quantity has an adjustable profile in the longitudinal direction of the fiber grating. The control quantity could be temperature of or strain in the fiber Bragg grating FBG. Because of the possibility of adjustable different profiles over the length of the fiber Bragg grating a node still offers the function of full optical drop by applying a constant temperature or strain profile, while the function of optical drop-and-continue could be offered as well.

The drop-and-continue node of Fig. 4 comprises a circulator CIRC and an array of fiber Bragg gratings FBG1, FBG2 and FBG3 for the wavelength λ₁, λ₂ and λ₃ respectively. Said fiber Bragg gratings are provided with a tuning means, which in this embodiment consists of a heating elements array TM. As an illustrative example the profile of the produced heat on the fiber by the heating elements array TM is adjusted such that the wavelength λ₁ is dropped completely and the wavelength λ₂ is dropped by 20%.

The signals of the channels having the wavelengths λ₁, λ₂ ....., λₙ are applied to the input port IP of the drop node, reach the first terminal of the circulator CIRC and leaves the circulator at the second port connected to the first fiber Bragg grating FBG1. The channel of wavelength λ₁ is completely reflected to the drop port DP whereas a channel of wavelength λ₂ is only reflected by 20 % to the drop port DP. The channel of wavelength λ₂ is transmitted by 80 % to the through port TP of the drop node, while the channels of wavelengths λ₃ .....λₙ are completely transmitted to said through port.

If only the full drop function is used such as in known nodes of a network additional components, such as optical splitters and switches are necessary for putting through part of channel The optical drop-and-continue node according to the invention removes the disadvantage of additional costs. Moreover, arbitrary switching between full drop and drop and continue is possible with the invention.

Furthermore, the network is more flexible by using the optical drop-and-continue node according to the invention. When the network must be changed regarding the channel transmission specified initially, only the profile(s) of the fiber grating(s) need to be changed without changing the configuration of the network.

Additional advantages are already mentioned above in the introduction of this specification.

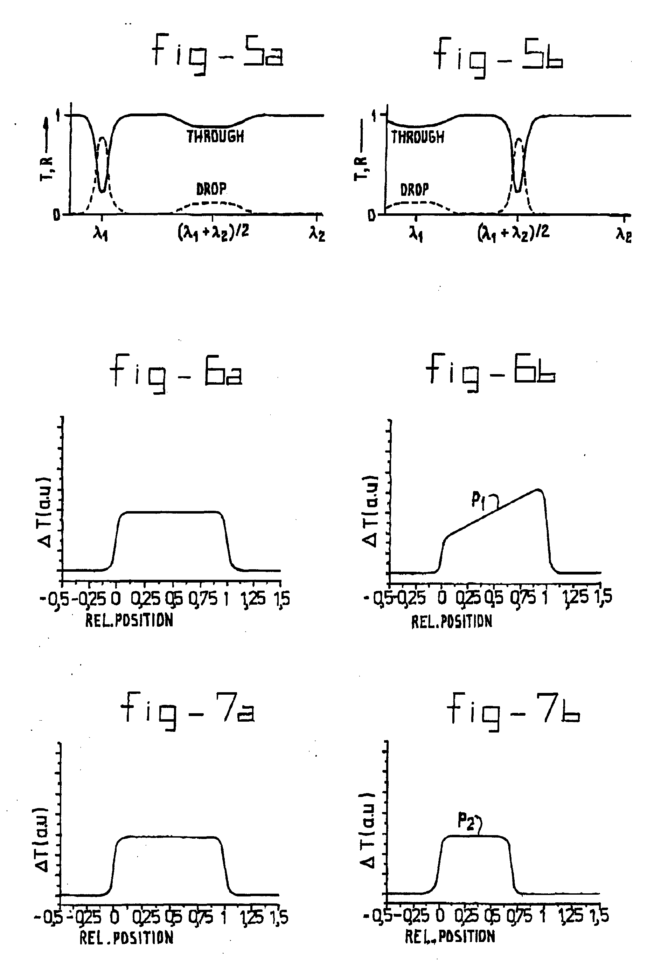

Figures 5a and 5b illustrate the functionality of the drop node of Fig. 4 for optical drop-and-continue operation at wavelength λ₁. The temperature or strain profile of the fiber Bragg gratings FBG₁, FBG₂ and FBG₃ is selected such that the fiber Bragg grating FBG₁ for wavelength λ₁ is partly detuned to a wavelength in between two signal wavelengths, for example at the wavelength (λ₁ + λ₂)/2 as shown in Fig. 5. This results in a reduced reflection coefficient at the drop wavelength λ₁ and consequently, the fraction of the signal at wavelength λ₁ that is transmitted to the through port TP is increased by the same amount of the reduction of the signal of wavelength λ₁ at the drop port.

In Figures 5a and 5b the reflection R (drop port) spectrum for a single fiber Bragg grating is shown as a dashed curve, whereas the transmission T (through port) spectrum is represented by the solid curve as a function of the wavelength.

In Figures 6a-7b the relative position with respect to the grating is indicated along the horizontal axis, which is defined as position/length of the grating and the AT is indicated along the vertical axis.

In Figure 6a the temperature profile of one fiber Bragg grating as a function of the position at the fiber grating is shown for completely dropping the respective wavelength, whereas in Fig. 6b a continuously rising temperature profile p1 for the same fiber Bragg grating is shown resulting in a reduced reflection to the drop port. Dependent on the slope of the profile and/or the mean temperature rise of the grating the amount of reduction could be adjusted.

In Figure 7a the same temperature profile is shown as in Fig. 6a The temperature profile in Fig. 7b has a substantially constant value part p2, the length of which is smaller than in Fig. 7a. Dependent on the length of said constant value part and/or the mean temperature rise of the grating the reduction of the reflection to the drop port could be controlled.

Similar profiles could also be used for strain distribution over the length of the fiber Bragg grating.

In case of temperature control, the tuning means comprise an array of individually controllable heating elements provided on the fiber grating.

In order to have a strain profile the tuning means comprise a stack of individually controllable piezo-electric elements, said piezo stack being provided on the fiber grating.

The drop node according to the invention could be completed with an optical add function, in which a second circulator is connected with its first and second terminal viewed in the circulation direction between the fiber grating (S) and the through port and to the third terminal of which a channel frequency signal can be supplied for adding this signal to the optical network. It is noted that other solutions, such as thin film filters and optical couplers are also possible within the scope of the invention.

## Claims

1. Drop node for an optical transmission network and having an input port (IP) for receiving an optical signal, a drop port (DP) for extracting a first optical output signal and a through port (TP) for a second optical output signal, said node comprising a circulator (CIRC) and at least one fiber grating (FBG), in which a first terminal of the circulator (CIRC) is connected to the input port (IP), its second terminal viewed in the circulation direction is coupled to the through port (TP) via the at least one fiber grating (FBG) and its third terminal viewed in the circulation direction is connected to the drop port (DP) and in which the fiber grating (FBG) is provided with a tuning means (TM) controlled by a control quantity, **characterized in that** the tuning means (TM) is arranged for spatially distributed control of the fiber grating (FBG) in its longitudinal direction and that the control quantity has an adjustable profile in the longitudinal direction of the fiber grating (FBG).

2. Drop node according to claim 1, wherein the slope of the profile (p1) of the quantity is adjustable.

3. Drop node according to claim 1 or 2, wherein the profile of the quantity has a substantially constant value part (p2) starting from the end of the fiber grating (FBG) faced to the second terminal of the circulator (CIRC) and the length of said substantially constant value part (p2) from said fiber grating (FBCr) end is adjustable.

4. Drop node according to claim 2 or 3, wherein the mean value of the quantity is adjustable.

5. Drop node according to claim 1, 2, 3, or 4, wherein the tuning means (TM) comprise a stack of individually controllable piezo-electric elements, said piezo stack being provided on the fiber grating (FBG).

6. Drop node according to claim 1,2,3 or 4, wherein the tuning means comprise an array of individually controllable heating elements provided on the fiber grating (FBG).

7. Drop node according to one of the claims 1-6, wherein one or more fiber gratings are series-connected to the at least one fiber grating (FBG), each arranged for a separate channel frequency.

8. Drop node according to one of the claims 1-7, wherein a second circulator is connected with its first and second terminal viewed in the circulation direction between the fiber grating(s) (PBG) and the through port (TP) and to the third terminal of which a channel frequency can be supplied for adding this channel to the optical network

9. Optical transmission network, wherein at least one transmission path is provided with at least one drop node according to one of the preceding claims.
